Europäisches Patentamt

European Patent Office

Office européen des brevets

(19)

(11) Publication number: **0 009 012**
**B1**

(12) **EUROPEAN PATENT SPECIFICATION**

(45) Date of publication of patent specification: **07.07.82**

(51) Int. Cl.³: **F 24 J 3/02**

(21) Application number: **79850079.9**

(22) Date of filing: **28.08.79**

(54) **Solar energy collector.**

(30) Priority: **01.09.78 SE 7809248**

(43) Date of publication of application:
**19.03.80 Bulletin 80/6**

(45) Publication of the grant of the patent:
**07.07.82 Bulletin 82/27**

(84) Designated Contracting States:
**CH DE FR GB**

(56) References cited:
**DE - A - 2 558 767**
**DE - B - 1 134 343**
**US - A - 3 048 375**
**US - A - 3 247 840**
**US - A - 3 915 147**
**US - A - 4 002 159**
**US - A - 4 079 725**

(73) Proprietor: **Karlsson, Jon**
**Götalandsvägen 194**
**S-125 55 Älvsjö (SE)**

(72) Inventor: **Karlsson, Jon**
**Götalandsvägen 194**
**S-125 55 Älvsjö (SE)**

(74) Representative: **Delhage, Einar et al,**
**Bergenstrahle & Lindvall AB Svartensgatan 6**
**S-116 20 Stockholm (SE)**

Courier Press, Leamington Spa, England.

# Solar energy collector

The present invention relates to a solar collector including a plurality of elongated thin walled reflectors arranged side by side adjustable in direction and designed to reflect incident radiation towards a respective longitudinal focus along which conveying means for a liquid heat transferring medium extend, said conveying means being connected to a heat collecting device, the walls of each reflector consisting of two wall portions which are pivotally interconnected along elongated pivot means for movement between an unfolded reflector condition and a folded condition.

Through e.g. U.S.—A—3 847 136, US—A—4 000 734, and US—A—4 079 725 and DE—A—2 533 530 solar collectors are known, which comprise a plurality of elongated parabolic reflectors arranged direction adjustable side by side. Along the focus of the reflectors a tube for liquid heat transferring medium extends, to which the sum radiation is thus reflected. The tubes are connected in series to some form of collecting arrangement, e.g. a heat exchanger for heating water.

Through U.S.—A—3 048 375 a venetian blind like heat control arrangement for windows is known. Each venetian blind slat contains a tube for a liquid heat transferring medium, said tubes at the same time forming pivot axis for the venetian blind slat. The tubes are connected in series to a heat collecting or heat emitting arrangement so that the temperature of the window surface can be controlled.

A further venetian blind type of solar energy collector is known through U.S.—A—4 002 159 which functions with a heat-absorptive surface of the blind.

A solar energy collector with foldable reflectors is furthermore known through U.S.—A—3 247 840.

Through DE—A—2 558 767 is furthermore known a solar collector comprising reflector means, having pivotally interconnected reflecting walls foldable about conveying means for a heat transferring fluid between an unfolded collector position and a folded position.

U.S.—A—3 915 147 discloses a solar collector having reflector wall means settable between certain positions with respect to a conveying means for heat transferring fluid.

One object of the present invention is to provide a solar collector of the kind stated initially, the effective time of operation and/or field of application of which is not limited to times during which direct sun radiation is incident.

A particular object of the invention is to provide a solar collector of the venetian blind type or the like, which combines the venetian blind function with a high efficiency of the solar collecting function.

The above and similar objects have been attained in that said two wall portions in said folded condition define an essentially winglike shape, within which the respective conveying means are enclosed.

Hereby it is i.e. possible to use the reflectors for energy collecting purpose both in cases of direct and indirect incident radiation, which will be apparent from the following description.

The invention will now be described more closely below while referring to one embodiment illustrated on the attached drawings.

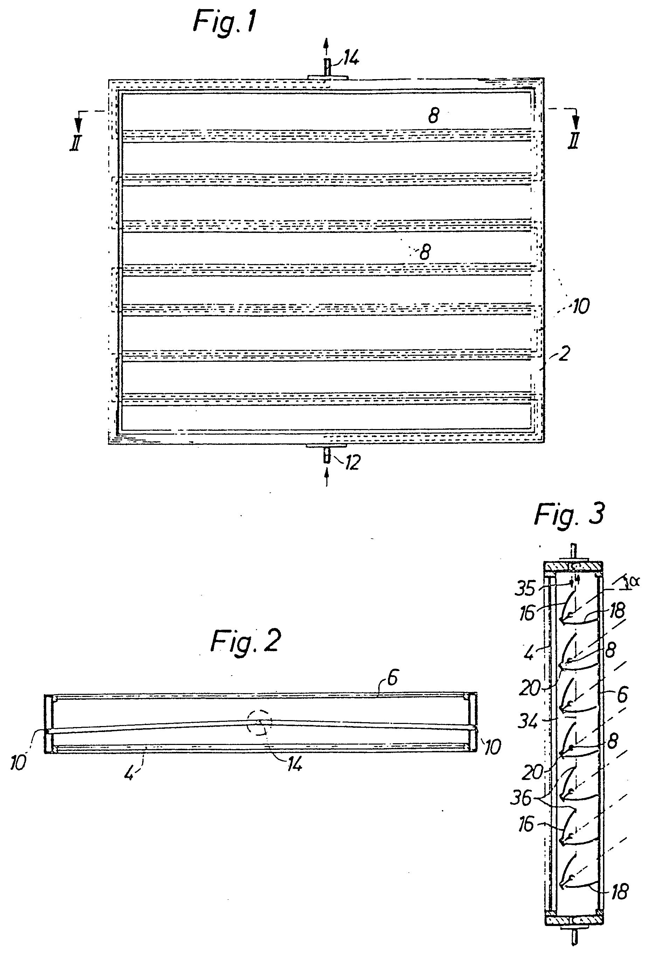

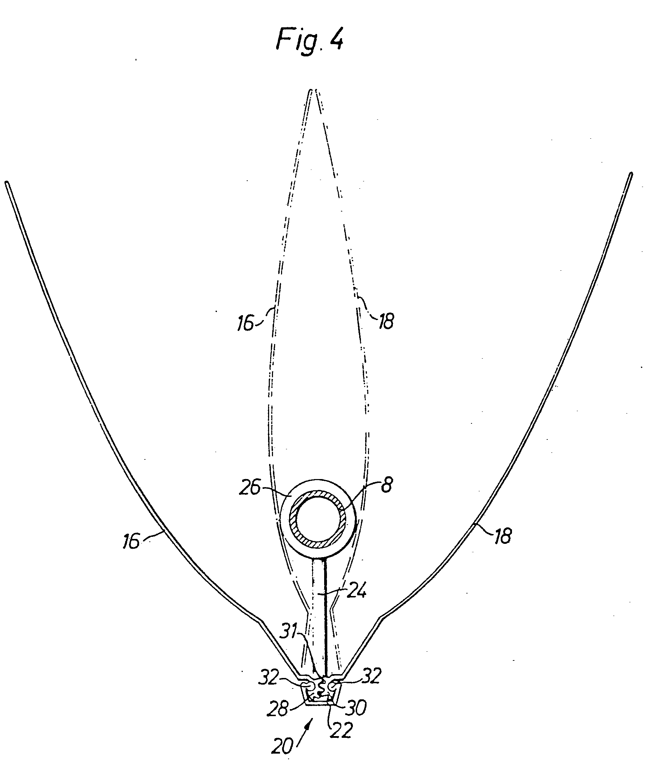

On the drawings Figures 1—3 in front view, sectional view in the direction of arrows II—II and vertical section, respectively, illustrate a window design including a venetian blind formed as a solar collector, and Figure 4 illustrates an end view of one of the solar energy collecting venetian blind slats.

The window illustrated in Figures 1—3 has a window sash 2, in which a double glass pane 4 is inserted on the side that shall face a room, and a single glass 6 is inserted on the outside. Between the glasses 4, on the one hand, and the glass 6, on the other hand, there is a space, in which a venetian blind designed as a solar energy collector, to be described more closely below, is arranged.

Between the opposite upright sides of the window sash a number of parallel tubes 8 extend. The tubes 8 are series connected via connecting tubes 10 extending in said upright sash sides. The tube system 8, 10 has a common inlet 12 and a common outlet 14. The inlet 12 and the outlet 14 are located in the pivot axis of the window and are intended to be connected via a rotatable coupling to connecting tubes opening in a corresponding window frame. The rotatable coupling and the window frame can be of a kind well known per se to an expert, and need therefore not be shown or described more closely here. The tube system 8—14 is intended to convey a liquid heat transferring medium and is connected to a heat collecting arrangement, which can be e.g. a heat exchanger for heating water.

The tubes 8 each pivotally carry a slat-reflector unit, the design of which appears from Fig. 4. More particularly this unit comprises two reflector wall portions 16 and 18. The wall portions 16 and 18 are pivotally interconnected along an elongated pivot means generally denoted 20, for movement between an unfolded condition, illustrated by full lines, and a folded condition illustrated by broken lines. In the unfolded condition the reflector portions 16 and 18 form a parabolic reflector, the inside of which is treated to obtain favourable reflecting properties. In the folded position the wall portions 16 and 18 define a shape essentially winglike in cross section, which encloses the tube 8, carrying the unit 16, 18.

A body portion 22, U-shaped in cross section, of the pivot means 20 is carried at one end of a number of pins 24 distributed along the tube 8. At their other ends the pins 24 are pivotally journalled on the tube 8 by means of an annular portion 26. The length of the pins 24 is such that the tube 8 is located in focus of the open parabolic reflector. The wall portions 16 and 18 at their mutually meeting longitudinal edges are interconnected by means of hinges. The hinges comprise ribs 28 and 30, respectively, having mutually engaging teeth 31. The U-shaped body portion 22 on the inside of both legs of the U has protrusions 32 partly circular in cross section. The protrusions 32 engage correspondingly shaped longitudinal recesses in the backside of the ribs 28, 30 so that a kind of "cylinder pivot" is formed between the protrusions 32 and the corresponding rib 28 and 30, respectively. By action of said "cylinder pivots" and the teeth engagement between the hinge ribs 28 and 30 a simultaneous and similar movement of the wall portions 16 and 18 can be attained in response to a force acting on either wall portion in either direction. This is used in a way to be described for the opening and closing of the wall portions 16 and 18.

More specifically a rod, only indicated in Fig. 3 at 34, extends along one side of the window, and is movably guided in its length direction as is indicated by arrows 35. The rod 34 at 36 slidably engages with the adjacent end edge of the wall portion 16 of all reflector units. Said engagement 36 is slidable along said end edge of the wall portion 16, e.g. by it being formed by means of two pins extending perpendicularly inwardly from the rod and being slidable along the outside and inside, respectively, of the wall portion 16.

By shifting of the rod 34 and by virtue of the slidable engagement with the wall portions 16, a turning torque, on the one hand, can be applied to the reflector units about the corresponding tube 8 via the pins 24, and a pivoting torque, on the other hand, can be exerted on the wall portion 16 about the pivot 20. By the teeth engagement in the hinges 28, 30, 32 the last mentioned torque results in simultaneous and similar movement of the wall portions 16 and 18.

By suitable design of the included elements and their mutual cooperation, the movements of the reflector units caused by operating the rod 34 can be controlled in a desired way. This control can e.g. be such that the reflector units in their entirety open reflector condition can be turned about the tube 8 between a highest direction angle setting, corresponding to highest solstice, and a lowest direction angle setting, corresponding to the lowest solstice. The direction angle is designated $\alpha$ in Fig. 3. The operating rod 34 can then be motor controlled by e.g. a photocell device so that the direction angle $\alpha$ of the reflector units always corresponds to the solstice.

During said lowest direction angle setting said control can then be so designed that movement downwards of the operating rod 34 causes folding of the reflector units besides the turning movement about the tube 8. During the movements of the reflector units described above the points of engagement 36 between the rod 34 and the wall portions 16 are, of course, moved depending upon the slope of the wall portions 16.

In connection with certain applications, which need not necessarily be in connection with venetian blind like devices, the outsides of the wall portions 16, 18 or the like can be treated for the best possible absorption of diffused light. In the folded condition of the reflectors such a solar collector can thereby act as an energy collecting device also in cases when direct sun radiation is not present.

## Claims

1. Solar collector including a plurality of elongated thin walled reflectors arranged side by side adjustable in direction and designed to reflect incident radiation towards a respective longitudinal focus along which conveying means (8) for a liquid heat transferring medium extend, said conveying means being connected to a heat collecting device, the walls of each reflector consisting of two wall portions (16, 18), which are pivotally interconnected along elongated pivot means (20) for movement between an unfolded reflector condition and a folded condition, characterized in that said two wall portions 16, 18 in said folded condition define an essentially winglike shape, within which the respective conveying means (8) are enclosed.

2. Solar collector according to claim 1, characterized in that said wall portions (16, 18) of each reflector are interconnected by connecting means (22; 28—32), which upon force action on one wall portion transfer this force action to the other wall portion so that said wall portions perform a simultaneous and similar pivoting movement about said pivot means (20) due to said force action.

3. Solar collector according to claim 2, characterized in that said connecting means comprise teeth (31) carried by the respective wall portions and respectively engaging each other along said pivot means (20).

4. Solar collector according to any of the preceding claims, characterized in that said conveying means (8) coincide with a turning axis around which the direction setting of the reflector is adjusted.

5. Solar collector according to claim 4, characterized in that a body portion (22) of the pivot means is carried at one end of pins (24), which at their other ends are pivotally connected to said conveying means (8).

6. Solar collector according to any of claims 1—5 characterized in that the same forms a part of or consists of a venetian blind arrangement having slats which are formed by said reflectors, the wall portions (16, 18) of which are foldable to said reflector condition in a light shutting condition of the venetian blind, and to said folded condition in a light transmitting condition of said venetian blind.

7. Solar collector according to claim 6, characterized in that said venetian blind is located within a window (2, 4, 6), in which parallel series connected tubes (8) extend between opposite sides of the window sash, a common outlet (14) and a common inlet (12) for the series connected tubes being located in the pivot axis of the window for connection via a rotatable coupling to connecting tubes opening in a corresponding window frame, said parallel tubes (8) each forming the conveying means of its respective reflector.

8. Solar collector according to any of the preceding claims, characterized in that at least part of the outwardly turned side of the reflectors in the folded condition are radiation absorbing.

**Revendications**

1. Capteur d-énergie solaire comprenant une pluralité de réflecteurs à paroi mince et de forme allongée, disposés côte à côte et pouvant être réglés en direction, ce réflecteur étant conçu de manière à réfléchir les radiations incidentes en direction d'un foyer longitudinal correspondant le long duquel s'étend un moyen (8) d'acheminement de liquide caloporteur, ledit moyen d'acheminement étant raccordé à un dispositif capteur de chaleur, les parois de chaque réflecteur consistant en deux parties de paroi (16, 18) qui sont articulées l'une à l'autre le long d'un moyen d'articulation (20) de forme allongée en vue d'un déplacement entre un état de réflecteur déplié et un état plié, caractérisé par le fait que les deux parties de paroi précitées (16, 18) dans l'état plié précité définissent une forme qui est analogue essentiellement à des ailes et à l'intérieur de laquelle est enfermé le moyen d'acheminement correspondant (8).

2. Capteur d'énergie solaire suivant la revendication 1, caractérisé par le fait que lesdites parties de paroi (16, 18) de chaque réflecteur sont assemblées l'une à l'autre par un moyen d'assemblage (22; 28—32) qui, sous l'action d'une force exercée sur une des parties de paroi, transfèrent cette action de la force à l'autre partie de paroi de manière que lesdites parties de paroi exécutent un mouvement de pivotement simultané et similaire autour dudit moyen d'articulation (20) par suite de l'action précitée de la force.

3. Capteur d'énergie solaire suivant la revendication 2, caractérisé par le fait que ledit moyen d'assemblage comprend des dents (31) que portent les parties de paroi respectives et qui engrènent respectivement les unes dans les autres le long dudit moyen d-articulation (20).

4. Capteur d'énergie solaire suivant l'une quelconque des revendications précédentes, caractérisé par le fait que ledit moyen d'acheminement (8) coïncide avec l'axe de rotation autour duquel est ajusté le réglage d-orientation du réflecteur.

5. Capteur d'énergie solaire suivant la revendication 4, caractérisé par le fait qu'une partie de corps (23) du moyens d'articulation est supportée à l'une des extrémités destiges (24) dont les autres extrémités sont accouplées, en vue d'un pivotement, audit moyen d'acheminement (8).

6. Capteur d'énergie solaire suivant l'une quelconque des revendications 1—5, caractérisé par le fait qu'il fait partie ou consiste en un agencement de store vénitien comportant des lamelles qui sont formées par lesdits réflecteurs dont les parties de paroi (16, 18) peuvent être pliées dans ledit état de réflecteur dans une condition d'arrêt de lumière du store vénitien et dans ledit état plié dans une condition de transmission de lumière dudit store vénitien.

7 Capteur d'énergie solaire suivant la revendication 6, caractérisé par le fait que ledit store vénitien est placé à l'intérieur d'une fenêtre (2, 4, 6) dans laquelle des tubes parallèles (8) raccordés en série s'étendent entre les côtés opposés du châssis de fenêtre, une sortie commune (14) et une entrée commune (12 pour les tubes raccordés en série étant placées dans l'axe de pivotement de la fenêtre en vue d'un raccordement par l'intermédiaire d'un raccord rotatif à des tubes de raccordement débouchant dans un châssis de fenêtre correspondant, lesdits tubes parallèles (8) formant chacun le moyen d'acheminement de son réflecteur correspondant.

8. Capteur d'énergie solaire suivant l'une quelconque des revendications précédentes, caractérisé par le fait qu'au moins une partie du côté, orienté vers l'extérieur, des réflecteurs dans l'état plié absorbe les radiations.

**Patentansprüche**

1. Solarkollektor mit mehreren länglichen dünnwandigen Reflektoren, die nebeneinander richtungseinstellbar angeordnet sind und einfallende Strahlung jeweils auf eine Brennlinie reflektieren, längs der eine Leitung (8) für ein flüssiges Wärmetransportmedium verläuft, die an eine Wärmesammelvorrichtung angeschlossen ist, wobei die Wände eines jeden Reflektors aus zwei Wandteilen (16, 18) bestehen, die schwenkbar längs einer Gelenkvorrichtung (20) miteinander verbunden und auseinander- sowie zusammengeklappt werden können, dadurch gekennzeichnet, daß die beiden Wandteile (16, 18) im zusammengeklappten Zustand die Form eines Tragflügels haben, der die jeweilige Leitung (8) für das Wärmetransportmedium einschließt.

2. Solarkollektor nach Anspruch 1, dadurch gekennzeichnet, daß die Wandteile (16, 18) eines jeden Reflektors über Gelenkteile (22; 28 bis 32) miteinander verbunden sind, die bei Kraftwirkung auf einen Wandteil (z.B. 16) diese Kraftwirkung auf den anderen Wandteil (18) übertragen, so daß die Wandteile (16, 18) eine gleichzeitige und gleichsinnige Schwenkbewegung um die Gelenkvorrichtung (20) ausführen.

3. Solarkollektor nach Anspruch 2, dadurch gekennzeichnet, daß die Gelenkteile (22; 28 bis 32) Zähne (31) aufweisen, die an den Wandteilen (16, 18) vorgesehen sind und längs der Gelenkvorrichtung (20) ineinander eingreifen.

4. Solarkollektor nach einem der vorhergehenden Ansprüche, dadurch gekennzeichnet, daß die Leitung (8) für das Wärmetransportmedium auf einer Drehachse liegt, bezüglich der die Richtungseinstellung des Reflektors erfolgt.

5. Solarkollektor nach Anspruch 4, dadurch gekennzeichnet, daß ein Gelenkteil (22) der Gelenkvorrichtung an den einen Enden von Stäben (24) gehalten ist, die an ihren anderen Enden mit der Leitung (8) schwenkbar verbunden sind.

6. Solarkollektor nach einem der vorhergehenden Ansprüche, dadurch gekennzeichnet, daß er teilweise oder insgesamt eine Jalousie bildet, deren Lamellen durch die Reflektoren gebildet sind, die im auseinandergeklappten Reflexionszustand das Licht abschirmen und im zusammengeklappten Zustand das Licht durchlassen.

7. Solarkollektor nach Anspruch 6, dadurch gekennzeichnet, daß die Jalousie in einem Fenster (2, 4, 6) angeordnet ist, in dem zueinander parallele und serienverbundene Rohre (8) zwischen einander gegenüberstehenden Rahmenteilen des Fensterflügels verlaufen, daß ein gemeinsamer Auslaß (14) und eine gemeinsamer Einlaß (12) für die Rohre (8) in der Schwenkachse des Fensterflügels angeordnet und über eine drehbare Kupplung mit Anschlußleitungen innerhalb des entsprechenden Fensterrahmens verbunden sind und daß die parallelen Rohre (8) jeweils die Leitung eines Reflektors bilden.

8. Solarkollektor nach einem der vorhergehenden Ansprüche, dadurch gekennzeichnet, daß mindestens ein Teil der nach außen weisenden Seiten der Reflektoren im zusammengeklappten Zustand strahlungsabsorbierend ist.

*Fig. 1*

*Fig. 3*

*Fig. 2*

## Fig. 4